# EUROPÄISCHE PATENTSCHRIFT

(11) **EP 2 349 843 B1**
(45) Veröffentlichungstag und Bekanntmachung des Hinweises auf die Patenterteilung: **04.01.2017**
(21) Anmeldenummer: 09759731.4
(22) Anmeldetag: 24.11.2009
(51) Int. Cl.: B64F 5/00, A47G 27/04, B60N 3/04, B64D 11/00

(54) **VERFAHREN ZUM VERLEGEN EINES BODENBELAGS IN EINER KABINE EINES FAHRZEUGS**
METHOD FOR LAYING A FLOOR COVERING IN A CABIN OF A VEHICLE
PROCÉDÉ DE POSE D'UN REVÊTEMENT DE SOL DANS UNE CABINE DE VÉHICULE

(30) Priorität: 24.11.2008 DE 102008058751; 24.11.2008 US 200063 P
(43) Veröffentlichungstag der Anmeldung: 03.08.2011
(73) Patentinhaber: Airbus Operations GmbH, 21129 Hamburg (DE)
(72) Erfinder: GONNSEN, Johannes, 22767 Hamburg (DE)
(74) Vertreter: Kopf Westenberger Wachenhausen Patentanwälte PartG mbB
(86) Internationale Anmeldenummer: PCT/EP2009/065732
(87) Internationale Veröffentlichungsnummer: WO 2010/058027

(56) Entgegenhaltungen:
- WO-A1-90/01411
- DE-U1- 8 226 915
- DE-U1-202005 020 097
- FR-A1- 2 376 016
- FR-A1- 2 715 615
- US-A- 3 696 461

## Beschreibung

### TECHNISCHES GEBIET

Die Erfindung betrifft ein Verfahren zum Verlegen eines Bodenbelags in einer Kabine eines Fahrzeugs. Die Erfindung betrifft ferner einen Bodenbelag für die Kabine eines Fahrzeugs.

### HINTERGRUND DER ERFINDUNG

Eine Kabine eines Fahrzeugs enthält üblicherweise eine Reihe von Sitzen, auf denen Passagiere Platz nehmen können. Zum Steigern des Wohlbefindens der Passagiere und zur optischen Aufwertung der Kabine befindet sich üblicherweise auch ein ansprechender Bodenbelag auf dem Kabinenfußboden, der bei der Ausrüstung des Fahrzeugs vor Montage der Passagiersitze verlegt wird. Bei Fahrzeugen mit hohem Passagieraufkommen, wie dies bei Verkehrsflugzeugen regelmäßig der Fall ist, wird der Bodenbelag mechanisch beansprucht und zugleich verschmutzt, so dass er üblicherweise in gewissen zeitlichen Abständen ausgewechselt wird.

Im Stand der Technik ist es hierfür erforderlich, die Passagiersitze aus der Kabine zu entfernen, so dass der Bodenbelag frei zugänglich ist und ausgetauscht werden kann. Insbesondere bei größeren Fahrzeugen ist diese Vorbereitungsmaßnahme sehr zeit- und kostenintensiv. Es ist derzeit keine Möglichkeit bekannt, wie der Bodenbelag eines Fahrzeugs ausgetauscht werden kann, ohne die in der Kabine befindlichen Passagiersitze zu demontieren.

DE 20 2005 020 097 U1 , die den nächstliegenden Stand der Technik darstellt, zeigt eine Einweg-Fußbodenmatte, die aus einem Vorratsbehälter ausziehbar und nach Gebrauch abtrennbar ist.

FR 2715615 A1 zeigt von einer Rolle abrollbare Fußmatten, die mit Befestigungselementen befestigt werden können.

DE 82 26 915 U1 zeigt eine Bodenbelagbahn aus Teppichware mit selbsthaftender Unterseite, auf der eine rutschfeste Schutzfolie angeordnet ist, welche nach dem Zurechtschneiden des Belags abgezogen wird.

### ZUSAMMENFASSUNG DER ERFINDUNG

Eine Aufgabe der Erfindung könnte daher darin liegen, ein Verfahren vorzuschlagen, dass das Verlegen oder Austauschen eines Bodenbelags eines Fahrzeugs erlaubt, ohne dafür die in der Kabine befindlichen Passagiersitze ausbauen zu müssen. Eine weitere Aufgabe der Erfindung könnte darin liegen, einen geeigneten Bodenbelag vorzuschlagen, der sich leicht verlegen oder austauschen lässt, ohne dafür die in der Kabine befindlichen Passagiersitze ausbauen zu müssen.

Eine der Aufgaben könnte durch ein Verfahren mit den Schritten gemäß dem unabhängigen Patentanspruch 1 gelöst werden. Vorteilhafte Weiterbildungen des erfindungsgemäßen Verfahrens sind den Unteransprüchen zu entnehmen.

Gemäß einem ersten Aspekt der Erfindung wird zunächst mindestens ein Verbindungsmittel auf mindestens ein Element ausgewählt aus einer Gruppe umfassend einen Fußboden und den Bodenbelag angebracht. Der Bodenbelag wird anschließend zu einer kompakten Einheit gebracht ("kompaktiert"), wobei zumindest ein Ende des Bodenbelags freiliegen sollte. Der kompaktierte Bodenbelag wird danach in die Kabine des Fahrzeugs eingebracht und auf den Fußboden gelegt. Da sich das Verfahren besonders auf das Verlegen eines Bodenbelags in Bereichen eines Kabinenfußbodens bezieht, auf dem Einbauten wie etwa Passagiersitze angeordnet sind, sollte die kompakte Einheit des Bodenbelags beispielsweise vor einem in einer Erstreckungsrichtung vordersten Passagiersitz oder beispielsweise hinter einem hintersten Passagiersitz angeordnet werden. Das freiliegende Ende des Bodenbelags wird danach entlang einer Erstreckungsrichtung der Kabine unterhalb der Einbauten auf dem Kabinenfußboden entlang gezogen und anschließend bei vollständiger Ausbreitung auf dem gewünschten Bereich des Fußbodens durch das Verbindungsmittel mit dem Fußboden verbunden.

Dies bedeutet zwangsläufig auch, dass der Bodenbelag eine Breite aufweisen muss, die es ermöglicht, ihn unterhalb von Einbauten von einem Bereich einer Kabine oder eines Kabinenabschnitts zu einem anderen beabstandeten Bereich auf dem Kabinenfußboden entlang ziehen zu können. Im Falle von Passagiersitzen als Einbauten würden die beiden betreffenden Bereiche longitudinal voneinander beabstandet sein. Es könnten allerdings auch Einbauten existieren, die eine Verlegung in lateraler Richtung erfordern oder anbieten. Dabei sind die Passagiersitze in einer Kabine eines Verkehrsflugzeugs häufig in Form von Sitzgruppen realisiert, die aus zwei, drei oder vier miteinander verbundenen Sitzen bestehen. Diese Sitzgruppen könnten mit zwei oder mehr Beinen, Rahmen, oder dergleichen in Schienen befestigt sein, die sich auf dem Fußboden erstrecken. Beispielsweise könnten zwei oder mehr Passagiersitze mit lediglich zwei Beinpaaren in derartigen Fußbodenschienen befestigt sein, wohingegen bei anderen Ausführungen auch zwischen diesen Beinpaaren weitere Beine vorhanden sein könnten, die eine ausreichend sichere Befestigung der Passagiersitzgruppe ermöglichen. Unterhalb derartiger Sitzgruppen könnten demnach relativ breite Zwischenräume überbrückt werden, in denen der Bodenbelag entlang des Kabinenfußbodens gezogen wird. Wird der kompaktierte Bodenbelag vor einen vordersten Sitz bzw. eine vordere Sitzgruppe gelegt, kann er in Fahrt- bzw. Flugrichtung gesehen "nach hinten" bevorzugt bis hinter eine letzte Sitzgruppe gezogen werden oder umgekehrt. Sollten sich unterhalb der Einbauten mehrere Hindernisse, beispielsweise in Form von Beinen, Rahmen oder dergleichen befinden, könnte der Bodenbelag eine entsprechende Schlitzung aufweisen, die ein vereinfachtes Durchführen erlaubt, ohne mehrere einzelne Bodenbeläge durchführen zu müssen.

Besonders bevorzugt werden zum Ziehen des Bodenbelags Zugmittel verwendet, die je nach ihrer Bauart beispielsweise an dem Bodenbelag selbst befestigt werden und relativ leicht unterhalb der Sitze durchgezogen werden oder beispielsweise auch durchgesteckt, durchgeworfen oder dergleichen werden können. Über die Zugmittel kann von einer Position hinter oder vor einem Sitz oder anderen Einbauten sehr leicht der Bodenbelag in die gewünschte Position gebracht werden, da zum Durchführen des Bodenbelags von einer Position seitlich der Passagiersitze das sukzessive Durchziehen unter eine Sitzgruppe relativ mühsam ist.

Das Kompaktieren des Bodenbelags könnte beispielsweise das Aufrollen, das Falten, das Zusammenlegen oder dergleichen beinhalten. Ziel der Kompaktierung ist, eine kompakte Einheit zu schaffen, die leicht von möglichst nur einer Person transportiert werden kann und auch in dem geringen zur Verfügung stehenden Platz vor oder hinter einem Sitz abgelegt werden kann. Besonders bevorzugt wird der Bodenbelag aufgerollt. Beim Ziehen des aufgerollten Bodenbelags unter die Passagiersitze könnte eine Stange, eine Halterung oder dergleichen eingesetzt werden, damit der Bodenbelag bei der Zugbewegung wieder abrollt, aber gleichermaßen die kompakte Einheit nicht unterhalb eines Sitzes gezogen und dort möglicherweise eingeklemmt wird.

In einer weiteren vorteilhaften Ausführungsform der vorliegenden Erfindung sind das Verbindungsmittel an dem Bodenbelag und die Zugmittel an dem Verbindungsmittel befestigt. Dadurch ist es nicht erforderlich, entsprechende Einrichtungen wie Löcher, Ösen oder Haken an dem Bodenbelag zu integrieren, an denen Zugmittel befestigt werden könnten.

Gleichermaßen könnte es auch bevorzugt sein, Zugmittel an dem Bodenbelag selbst zu befestigen. Hierzu kämen mehrere Befestigungsvarianten in Betracht. Besonders vorteilhaft wäre die Integration von Schlaufen an den Enden des Bodenbelags, in die entsprechende Zugmittel eingehängt oder geknotet werden. Nach erfolgtem Durchziehen könnten die Schlaufen mit einem Werkzeug, etwa einem Teppichmesser oder dergleichen, entfernt werden. Handelt es sich bei dem Bodenbelag um einen Teppich oder ähnliche textile Bodenbeläge, könnten Zugmittel auch durch eine Art Klettverschluss an der Oberseite des Bodenbelags angebracht werden und nach Durchziehen des Bodenbelags sehr leicht wieder entfernt werden. Alternativ dazu könnten auch Klemmvorrichtungen wie beispielsweise federlose Stoffklemmen, wie sie von Hosenträgern bekannt sind, oder dergleichen eingesetzt werden.

In einer bevorzugten Weiterbildung des erfindungsgemäßen Verfahrens umfasst das Anbringen mindestens eines Verbindungsmittels das Aufbringen mindestens einer mit einer Schutzschicht abgedeckten Klebeschicht. Würde eine herkömmliche Klebeschicht auf die Unterseite des Bodenbelags oder auf den Fußboden der Kabine angebracht werden, wäre es aufgrund der stets einsetzenden Haftwirkung der Klebeschicht nur schwer möglich, den kompletten Bodenbelag auf dem Kabinenfußboden entlang zu ziehen. Die Schutzschicht dient ferner auch dazu, die Klebeschicht vor Verschmutzung zu schützen. Soll das Verbindungsmittel an den Bodenbelag aufgebracht werden, könnte die Schutzschicht das Kompaktieren des Bodenbelags deutlich erleichtern.

Demgemäß umfasst das Verbinden des Bodenbelags über das Verbindungsmittel auch das Entfernen der Schutzschicht. Dies wird in einer besonders bevorzugten Variante des erfindungsgemäßen Verfahrens dadurch erreicht, dass die Schutzschicht entgegengesetzt zur vorherigen Zugrichtung des Bodenbelags abgezogen wird. Das freiliegende Ende des kompaktierten Bodenbelags ist beispielsweise über die gesamte Kabinenlänge des Fahrzeugs gezogen und befindet sich an einem Anfangspunkt für eine Verklebung, an dem er mittels Begrenzungskanten des Bodenbelags und des Kabinenfußbodens ausgerichtet und dann mit dem Kabinenfußboden sukzessive oder in einer fließenden Bewegung verbunden wird. Zum Verkleben wird die Schutzschicht abgezogen und sukzessive der Bodenbelag an den Fußboden gedrückt und gegebenenfalls vorher in der Lage korrigiert.

Andererseits könnte es zur Vermeidung zweier unterschiedlicher Arbeitspositionen auch sinnvoll sein, die Schutzschicht in der gleichen Richtung wie die vorherige Zugrichtung von der Klebeschicht abzuziehen.

Das Abziehen der Schutzschicht wird bevorzugt mittels eines an der Schutzschicht angeordneten und im Wesentlichen zwischen dem Bodenbelag und dem Kabinenfußboden verlaufenden Zugmittels durchgeführt. Beim Vorbereiten des Bodenbelags oder des Fußbodens, insbesondere beim oder nach dem Aufbringen der Klebeschicht auf den Bodenbelag und/oder den Fußboden, könnten entsprechende Zugmittel an der Schutzschicht der Klebeschicht angebracht werden. Die Zugmittel könnten mit dem Bodenbelag zusammen kompaktiert werden, sofern die Klebeschichten vor dem Verlegen an dem Bodenbelag angebracht werden. Alternativ dazu würden sie sich bei einer vor der Verlegung erfolgenden Anbringung der Klebestreifen auf dem Fußboden bereits in einer für das Abziehen geeigneten Position befinden. Nach dem Durchziehen des Bodenbelags kann schließlich das Abziehen der Schutzschicht über das Zugmittel erfolgen.

Der Einfachheit halber könnte die Klebeschicht als doppelseitiges Klebeband ausgeführt werden, das auf den Bodenbelag oder den Fußboden geklebt werden könnte. Im Falle des Bodenbelags könnte ein Aufbringen auf einem ausgebreiteten oder zwischen zwei Rollen oder einer anderen Vorrichtung verlaufenden Bodenbelags erfolgen. Sollte ein derartiges Klebeband auf den Fußboden geklebt werden, wäre es denkbar, das Klebeband zunächst unter den Einbauten auf dem Fußboden entlang zu ziehen und nach dieser Zugbewegung eine zum Fußboden gerichtete Schutzschicht über Zugmittel abzulösen. Nach einem Andrücken des Klebebands auf dem Fußboden wäre das Durchziehen und anschließendes Festkleben des Bodenbelags ermöglicht.

Durch das erfindungsgemäße Verfahren wird eine besonders einfache Möglichkeit bereitgestellt, einen Bodenbelag in einer Passagiersitze aufweisenden Kabine eines Fahrzeugs zu verlegen, ohne jedoch diese Passagiersitze ausbauen zu müssen. Sofern sich Gänge innerhalb der Kabine befinden, die keine Passagiersitze aufweisen, können dort mit herkömmlichen Verlegeverfahren Bodenbeläge verlegt oder ausgetauscht werden.

Die Erfindung betrifft ferner auch einen Bodenbelag, der mindestens eine Klebeschicht aufweist, die mit einer Schutzschicht abgedeckt ist, welche wiederum ein Zugmittel aufweist wie vorangehend geschildert. Der Bodenbelag sollte dazu geeignet sein, mit Hilfe des erfindungsgemäßen Verfahrens verlegt zu werden. Dies bedeutet insbesondere, dass keine steifen bzw. starren Bodenbeläge gemeint sind, sondern bevorzugt solche Bodenbeläge, die gefaltet, zusammengelegt, aufgerollt oder auf andere Weise kompaktiert werden können, um sie leicht in die Kabine einbringen und dort abrollen oder auf andere Weise ausbreiten können.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt einen ausgebreiteten Bodenbelag mit angebrachten Klebestreifen.
Fig. 2a+b zeigen einen zu einer Rolle kompaktierten Bodenbelag.
Fig. 3 zeigen einen Zugvorgang des Bodenbelags auf dem Kabinenfußboden.
Fig. 4 zeigt einen auf dem Kabinenfußboden positionierten Bodenbelag.
Fig. 5a - d zeigen einen Ablösevorgang der Schutzschichten.
Fig. 6a + b zeigen modifizierte Zugmittel.
Fig. 7a + b zeigen weiter modifizierte Zugmittel.
Fig. 8a + 8b zeigen das Anbringen von Verbindungsmitteln auf dem Kabinenfußboden sowie das Ablösen von Schutzschichten.
Fig. 9a + b zeigen den Vorgang des Entfernens eines Bodenbelags
Fig. 10 zeigt einen in einer Kabine verlegten Bodenbelag.
Fig. 11 zeigt eine schematische Blockdarstellung des Verfahrens

### DETAILLIERTE BESCHREIBUNG EXEMPLARISCHER AUSFÜHRUNGSFORMEN

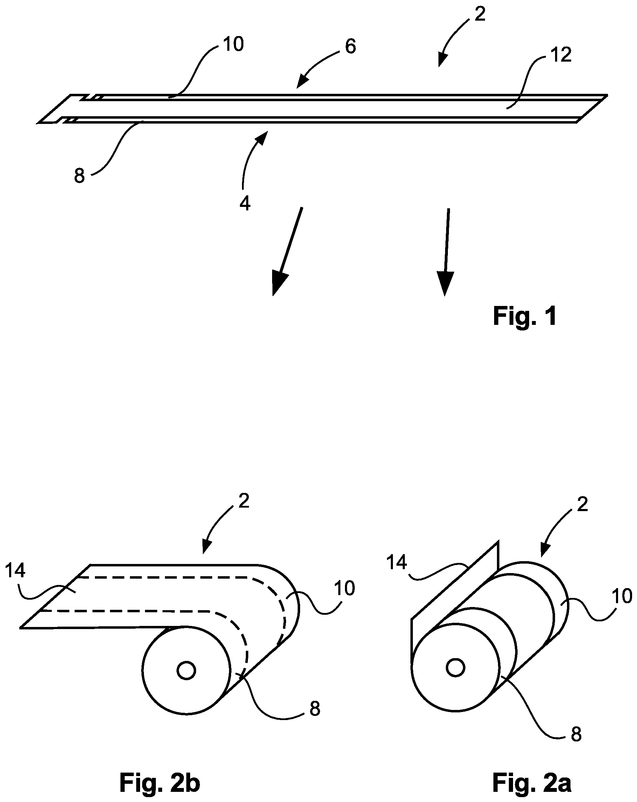

Fig. 1 zeigt einen ausgebreiteten Bodenbelag 2, der an zwei Längsseiten 4 und 6 exemplarisch mit Verbindungsmitteln in Form von Klebestreifen 8 und 10 ausgerüstet ist. Die Klebestreifen 8 und 10 können in einem ausgebreiteten Zustand des Bodenbelags 2 an die Unterseite 12 des Bodenbelags angebracht werden, um den Bodenbelag 2 auf die Verlegung vorzubereiten.

In den Fig. 2a und 2b wird dargestellt, dass der Bodenbelag 2 aufgrund seiner Flexibilität zusammen mit den Klebestreifen 8 und 10 zu einer Rolle zusammengerollt ("kompaktiert") werden kann, um so in die Kabine des Fahrzeugs eingebracht zu werden. Der Bodenbelag 2 ist derart zu kompaktieren, dass zumindest ein Ende 14 des Bodenbelags 2 freiliegt. Dieses Ende 14 sollte derart dimensioniert sein, dass es unter auf dem Kabinenfußboden angebrachten Einbauten durchgezogen werden und dauerhaft dort verbleiben kann. Beim Kompaktieren könnten einerseits die Klebestreifen 8 und 10 außen liegen (Fig. 2a), andererseits auch innen (Fig. 2b). Im letzteren Fall drängt das Ende 14 des ausgelegten Bodenbelags 2 tendenziell in Richtung Boden, so dass der Vorgang des Verbindens mit dem Fußboden erleichtert wird.

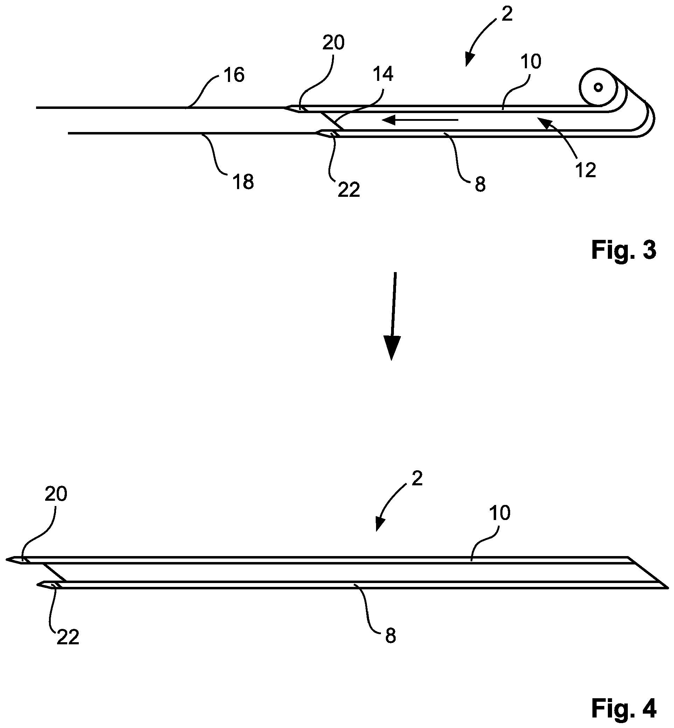

Nach Einbringen des Bodenbelags 2 in der kompaktierten Form in die Kabine des Fahrzeugs kann der Bodenbelag entlang des Kabinenfußbodens gezogen werden. Damit ein gleichmäßiges Abrollen oder Lösen des Bodenbelags 2 aus der kompaktierten Form erfolgt, ist bei der beispielhaften Darstellung aus Fig. 3 als Rollenhalter eine Stange in den aufgerollten Bodenbelag 2 eingesetzt, so dass sich der aufgerollte Bereich des Bodenbelags 2 nicht verrutscht und sich unterhalb von Passagiersitzen verklemmen könnte. Das Herausziehen des Bodenbelags 2 kann mittels als Zugseile ausgeführten Zugmitteln 16 und 18 gezogen werden. Die Zugmittel 16 und 18 sind bevorzugt an Schutzschichten 20 und 22 der Klebestreifen 8 und 10 angeordnet, so dass keine Verbindung zwischen den Zugmitteln 16 und 18 und dem Bodenbelag 2 auf mechanische Art oder dergleichen hergestellt werden muss.

In Fig. 4 ist der fertig ausgebreitete Bodenbelag 2 in einer Ansicht von unten zu sehen.

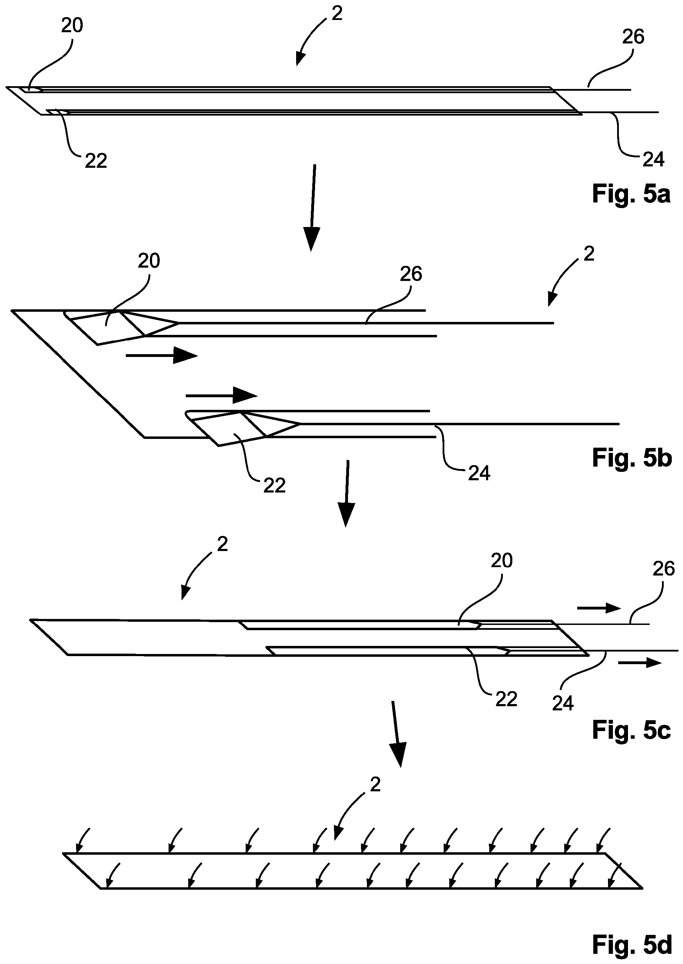

Zum Lösen der Schutzschichten 20 und 22 von den Klebestreifen 8 und 10 müssen die Schutzschichten 20 und 22 abgezogen werden, bevorzugt in einer Richtung entgegengesetzt zur Zugrichtung aus Fig. 3. Zum Abziehen der Schutzschichten 20 und 22 könnten zusätzliche Zugmittel 24 und 26 eingesetzt werden, die bereits bei der Vorbereitung des Bodenbelags 2 an den Schutzschichten 20 und 22 angebracht sein könnten, um dann mit dem Bodenbelag 2 gemeinsam kompaktiert zu werden. In den Fig. 5b - 5d wird der Vorgang des Abziehens der Schutzschichten 20 und 22 bis zum freiliegenden Bodenbelag 2 zu sehen. Im Anschluss an das Abziehen der Schutzschicht 20 und 22 kann ein Andrücken des Bodenbelags 2 entlang der Kabine durchgeführt werden, so dass eine sichere Verklebung hergestellt wird, wie durch die Pfeile in Fig. 5d angedeutet.

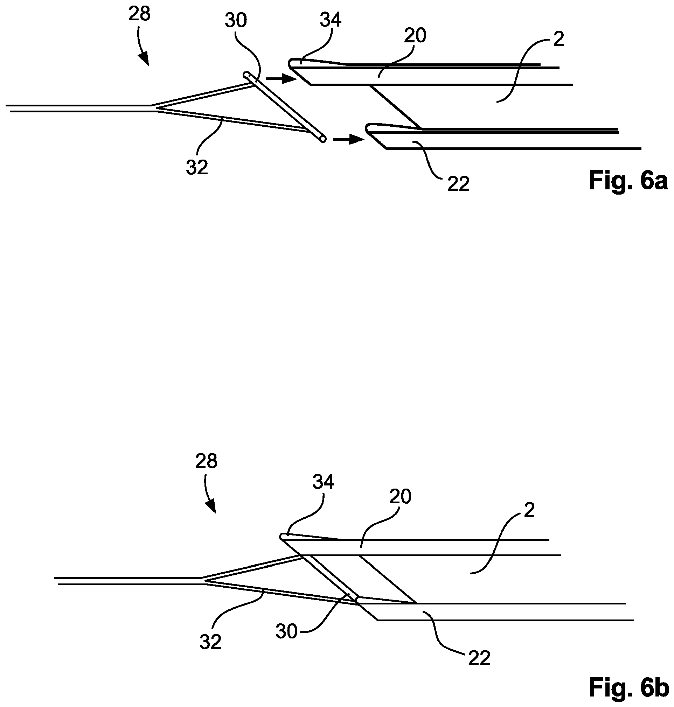

Zum Ziehen des Bodenbelags 2 entlang des Fußbodens können alternative Zugmittel 28 mit einem Stab 30 und einem Triangel-Band 32 verwendet werden, wobei der Stab 30 beispielsweise in laschenförmig umgeschlagene Enden 34 der Schutzschichten 20 und 22 eingreifen können, wie in den Fig. 6a und 6b dargestellt. Die Schutzschichten 20 und 22 könnten in doppelter Länge unterhalb des Bodenbelags 2 verlaufen, so dass eine ausreichende Stabilität gewährleistet werden kann.

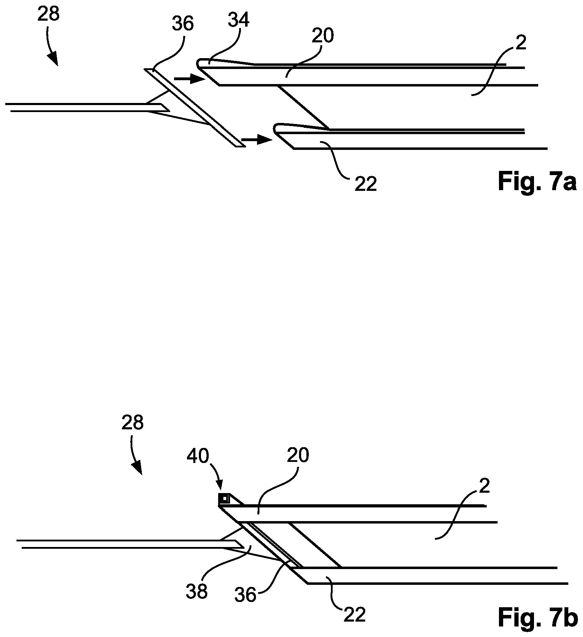

Alternativ dazu könnte auch ein Vierkantstab 36 in die Enden 34 der Schutzschichten 20 und 22 eingreifen, wie Fig. 7a darstellt, wobei anstatt eines Triangel-Bands 32 auch ein Blech 38 verwendet werden könnte. Wie in Fig. 7b gezeigt, könnte mit dem Stab 36 auch jeweils ein überstehendes Ende 40 der Schutzschichten 20 und 22 aufgewickelt sein.

Wahlweise können die Stäbe 30 und 36 auch zur Aufnahme oder zum Festklemmen der Schutzschichten 20 und 22 geschlitzt sein oder geeignete Klemmvorrichtungen, wie federlose Stoffklemmen, wie sie von Hosenträgern bekannt sind, oder dergleichen aufweisen.

Ebenso optional könnte das Zurückholen eines Zugmittels und/oder das Durchziehen des Bodenbelags 2 automatisch durch einen Federmechanismus nach Art eines Bandmaßes erfolgen. Alternativ dazu wäre auch möglich, die Zugmittel mit Hilfe einer Vorrichtung nach Art eines Bandmaßes, das in abgerolltem Zustand eine gewisse Axialkraft aufnehmen kann, entlang des Fußbodens zu verschieben.

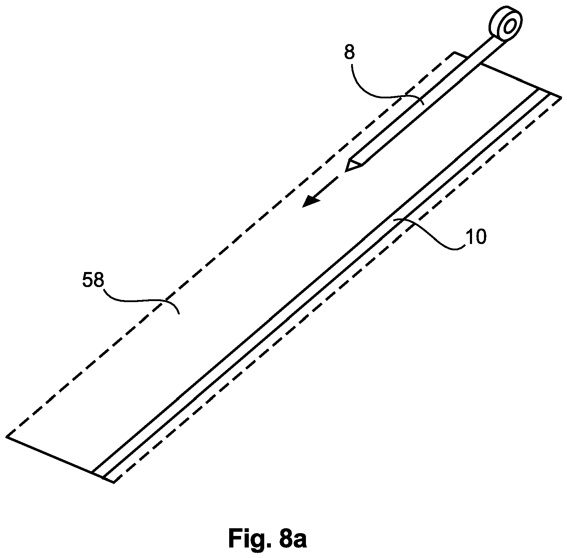

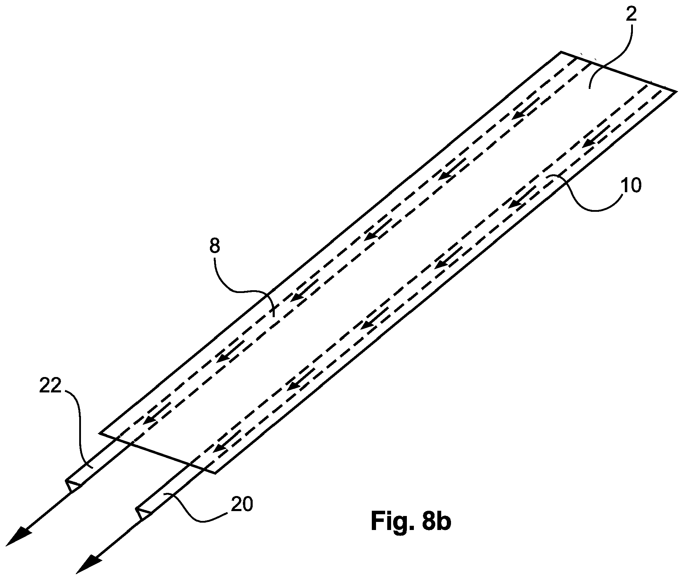

In einer alternativen Ausführungsform gemäß den Figuren 8a und 8b könnten Klebestreifen 8 und 10 beispielsweise durch Ziehen mittels Zugmitteln oder dergleichen auf einem Fußboden 58 angeordnet werden. Nach Aufbringen des Bodenbelags 2 können gemäß Fig. 8b die Schutzschichten 20 und 22 von den Klebestreifen 8 und 10 durch Abziehen entfernt werden, so dass ein Andrücken des Bodenbelags 2 auf den Fußboden 58 und die Klebestreifen 8 und 10 gemäß Fig. 5d erfolgen kann. Es sei daraufhingewiesen, dass auch gleichzeitig zusätzlich zu dem Anbringen von Klebestreifen 8 und 10 auf den Bodenbelag 2 auch ein Anbringen von Klebestreifen 8 und 10 auf dem Fußboden 58 durchgeführt werden könnte.

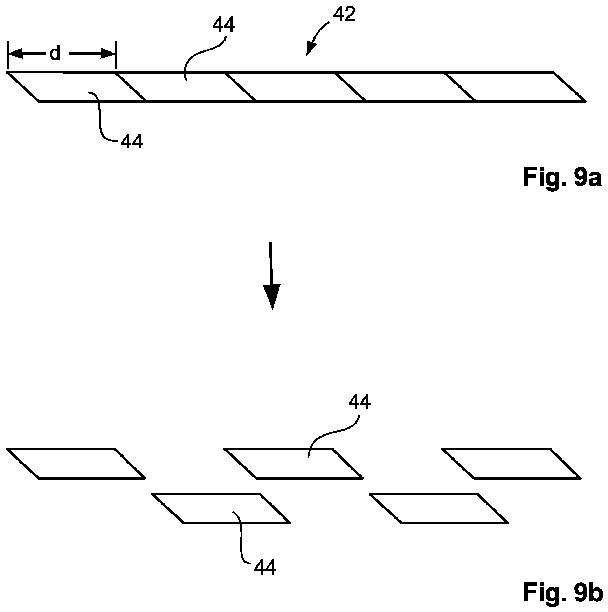

Ist es zudem erforderlich, alte Bodenbeläge aus der Kabine unterhalb von Passagiersitzen zu entfernen, könnten, wie in den Fig. 9a und 9b dargestellt, in mehr oder weniger regelmäßigen Abständen d die Schnitte in den zu entfernenden Bodenbelag 42 eingebracht werden, so dass sich einzelne Abschnitte 44 bilden, die sich zwischen den einzelnen Passagiersitzen befinden und dort abgezogen werden können.

Alternativ dazu könnte der Bodenbelag 42 durch Lösen einer Kante des Bodenbelags und Ziehen dieser Kante über den verbleibenden festgeklebten Bodenbelag 42 ohne vorheriges Einschneiden von dem Fußboden abgelöst werden. Dies könnte in vorteilhafter Weise ebenfalls durch Zugmittel realisiert werden, die über Stoffklemmen oder dergleichen an den Bodenbelag 42 angebracht werden könnten.

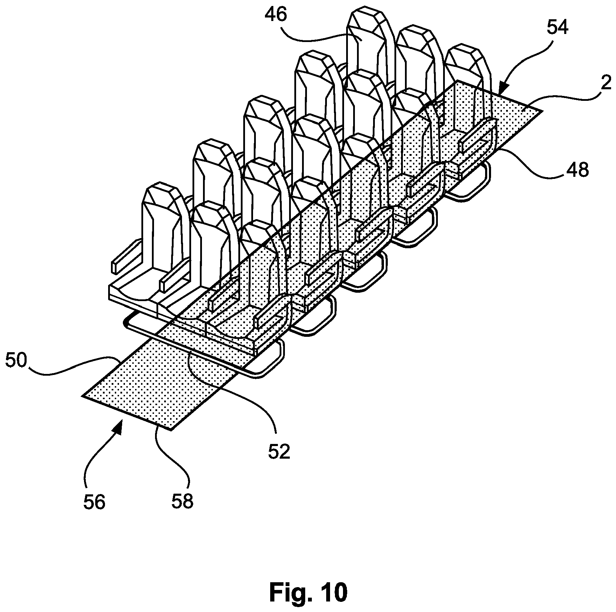

Weiterhin zeigt Fig. 10 einen Ausschnitt aus einer Kabine eines Fahrzeugs, in der mehrere Passagiersitze 46 angeordnet sind, unter denen sich der Bodenbelag 2 befindet. Zwischen Sitzschienen 48 und 50, an denen die Passagiersitze 46 befestigt sind, befindet sich unterhalb der Passagiersitze 46 ein im Wesentlichen freier Raum, der in regelmäßigen Abständen von Gepäckstangen 52 (sogenannten "baggage bars"), die Gepäckstücke vor dem Verrutschen nach vorne hindern, unterbrochen wird. Durch das erfindungsgemäße Verfahren kann in diesem nach oben und zur Seite hin begrenzten Zwischenraum der Bodenbelag 2 verlegt werden, ohne die Passagiersitze 46 vorher zu demontieren, da erfindungsgemäß der Bodenbelag 2 von einem hinteren Ende 54 zu einem vorderen Ende 56 (oder umgekehrt) eines Kabinenfußbodens 58 durchgezogen und mit diesem verklebt wird.

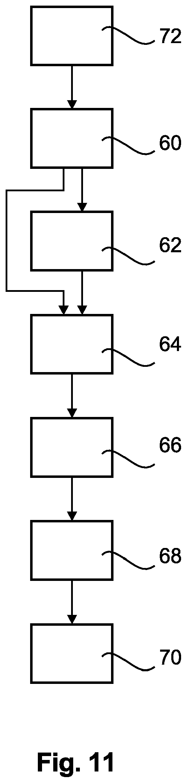

Schließlich zeigt Fig. 11 eine schematische Blockdarstellung des erfindungsgemäßen Verfahrens, das im Wesentlichen die folgenden Schritte aufweist. Nach dem Anbringen 60 mindestens eines Verbindungsmittels 8, 10 auf einen Fußboden und/oder den Bodenbelag 2, Kompaktieren 62 des Bodenbelags 2 zu mindestens einer kompakten Einheit mit einem freien Ende 12 des Bodenbelags 2 wird der kompaktierte Bodenbelags 2 in die Kabine des Fahrzeugs eingebracht 64 und auf den Fußboden gelegt 66. Anschließend wird das frei liegende Ende 14 des Bodenbelags 2 entlang einer Erstreckung der Kabine unterhalb der Einbauten auf dem Kabinenfußboden mittels Zugmitteln 16, 18, 24, 26, 28 gezogen 68 und schließlich über das Verbindungsmittel 8, 10 mit dem Kabinenfußboden verbunden 70. Das Kompaktieren 62 kann auch parallel zu dem Anbringen des Verbindungsmittels 8, 10 erfolgen oder zu einem vorherigen Zeitpunkt.

Zusätzlich dazu könnte bereits vorher der bereits auf dem Fußboden befindliche Bodenbelag 2 entfernt werden 72.

Außerdem ist es besonders vorteilhaft, doppelseitige Klebebänder 8, 10 einzusetzen, deren eine Seite stärker klebt als deren andere Seite. Die stärker klebende Seite ist an dem Bodenbelag 2 anzubringen, so dass ein sicheres Ablösen des Bodenbelags von einem Fußboden in der Kabine erfolgen kann, ohne dass Teppichreste verbleiben oder der Fußboden zerstört wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale und Schritte, die mit Verweis auf eines der obigen Ausführungsbeispiele beschrieben worden sind, auch in Kombination mit anderen Merkmalen und Schritten anderer oben beschriebener Ausführungsbeispiele verwendet werden können. Bezugszeichen in den Ansprüchen sind nicht als Einschränkung anzusehen.

### Bezugszeichen

- 2: Bodenbelag
- 4: Längsseite
- 6: Längsseite
- 8: Klebestreifen
- 10: Klebestreifen
- 12: Unterseite
- 14: Ende des Bodenbelags
- 16: Zugmittel
- 18: Zugmittel
- 20: Schutzschicht
- 22: Schutzschicht
- 24: Zugmittel
- 26: Zugmittel
- 28: Zugmittel
- 30: Rundstab
- 32: Triangel-Band
- 34: Ende einer Schutzschicht
- 36: Vierkantstab
- 38: Blech
- 40: Ende einer Schutzschicht
- 42: zu entfernender Bodenbelag
- 44: Abschnitte des zu entfernenden Bodenbelags
- 46: Passagiersitz
- 48: Sitzschiene
- 50: Sitzschiene
- 52: Gepäckstange
- 54: hinteres Ende
- 56: vorderes Ende
- 58: Kabinenfußboden
- 60: Anbringen Verbindungsmittel
- 62: Kompaktieren
- 64: Einbringen
- 66: Legen
- 68: Ziehen
- 70: Verbinden
- 72: Entfernen Bodenbelag

## Patentansprüche

1. Verfahren zum Verlegen eines Bodenbelags unterhalb von Einbauten auf einem Fußboden in einer Kabine eines Fahrzeugs, aufweisend die Schritte:
- Anbringen mindestens eines Verbindungsmittels (8, 10) auf mindestens ein Element ausgewählt aus einer Gruppe umfassend einen Fußboden und den Bodenbelag (2), wobei das Anbringen mindestens eines Verbindungsmittels (8, 10) das Aufbringen einer mit einer Schutzschicht (20, 22) abgedeckten Klebeschicht (8, 10) umfasst,
- Kompaktieren des Bodenbelags (2) zu mindestens einer kompakten Einheit, wobei zumindest ein Ende (12) des Bodenbelags (2) freiliegt,
- Einbringen des kompaktierten Bodenbelags (2) in die Kabine des Fahrzeugs und Legen auf den Fußboden,
- Ziehen des frei liegenden Endes (14) des Bodenbelags (2) entlang einer Erstreckung der Kabine unterhalb der Einbauten auf dem Kabinenfußboden mittels Zugmitteln (16, 18, 24, 26, 28) und
- Verbinden des Bodenbelags über das Verbindungsmittel (8, 10) mit dem Kabinenfußboden.

2. Verfahren nach Anspruch 1, wobei die Breite des Bodenbelags (2) an die Breite der Einbauten angepasst ist.

3. Verfahren nach Anspruch 1 oder 2, wobei die Verbindungsmittel (8, 10) an dem Bodenbelag (2) und die Zugmittel (16, 18, 24, 26, 28) an dem Verbindungsmittel (8, 10) befestigt werden.

4. Verfahren nach Anspruch 1 oder 2, wobei die Zugmittel (16, 18, 24, 26, 28) an dem Bodenbelag (2) befestigt werden.

5. Verfahren nach einem der vorhergehenden Ansprüche, wobei das Verbinden des Bodenbelags (2) über das Verbindungsmittel (8, 10) das Entfernen der Schutzschicht (20, 22) umfasst.

6. Verfahren nach Anspruch 5, wobei die Schutzschicht (20, 22) entgegengesetzt zur vorherigen Zugrichtung des Bodenbelags (2) abgezogen wird.

7. Verfahren nach Anspruch 5 oder 6, wobei das Abziehen der Schutzschicht (20, 22) mittels mindestens eines an der Schutzschicht (20, 22) angeordneten Zugmittels (16, 18, 24, 26, 28) durchgeführt wird.

8. Verfahren nach Anspruch 6, wobei das Zugmittel (16, 18, 24, 26, 28) im Wesentlichen zwischen dem Bodenbelag (2) und dem Fußboden verläuft.

9. Verfahren nach einem der vorhergehenden Ansprüche, wobei die Klebeschicht (8, 10) als doppelseitiges Klebeband ausgeführt ist.

10. Verfahren nach Anspruch 8, ferner umfassend den Schritt des Entfernens einer zu dem Fußboden angeordneten Schutzschicht (20, 22) über Zugmittel.

11. Verfahren nach einem der vorhergehenden Ansprüche, ferner umfassend das Andrücken des Bodenbelags (2) und des Verbindungsmittels (8, 10) an den Fußboden.

12. Verfahren nach einem der vorhergehenden Ansprüche, zusätzlich umfassend folgende vorbereitende Schritte zum Entfernen eines auf dem Fußboden befindlichen Bodenbelags (2):
- Einschneiden des Bodenbelags (2) zwischen an dem Fußboden angeordneten Einbauten zum Ausbilden von einzelnen Abschnitten (44),
- Abziehen der Abschnitte (44).

13. Verfahren nach einem der Ansprüche 1 bis 11, zusätzlich umfassend den vorbereitenden Schritt zum Entfernen eines auf dem Fußboden befindlichen Bodenbelags (2) durch Abziehen mittels eines Zugmittels.

## Claims

1. Method for laying a floor covering underneath installations on a floor in a cabin of a vehicle, comprising the steps of:
- affixing at least one connecting means (8, 10) to at least one element selected from a group comprising a floor and the floor covering (2), wherein affixing at least one connecting means (8, 10) comprises applying an adhesive layer (8, 10), covered by a protective layer (20, 22),
- compacting the floor covering (2) to form at least one compact unit, wherein at least one end (12) of the floor covering (2) is exposed,
- delivering the compacted floor covering (2) to the cabin of the aircraft and laying it on the floor,
- pulling the exposed end (14) of the floor covering (2) along an extension of the cabin underneath the installations on the cabin floor with the use of pulling means (16, 18, 24, 26, 28), and
- connecting the floor covering to the cabin floor with the use of the connecting means (8, 10).

2. Method of claim 1, wherein the width of the floor covering (2) matches the width of the installations.

3. Method of claim 1 or 2, wherein the connecting means (8, 10) are attached to the floor covering (2) and the pulling means (16, 18, 24, 26, 28) are attached to the connecting means (8, 10).

4. Method of claim 1 or 2 wherein the pulling means (16, 18, 24, 26, 28) are attached to the floor covering (2).

5. Method of any of the preceding claims, wherein connecting the floor covering (2) by way of the connecting means (8, 10) involves removing the protective layer (20, 22).

6. Method of claim 5, wherein the protective layer (20, 22) is pulled off against the previous pulling direction of the floor covering (2).

7. Method of claim 5 or 6, wherein pulling off the protective layer (20, 22) takes place by means of at least one pulling means (16, 18, 24, 26, 28) arranged on the protective layer (20, 22).

8. Method of claim 6, wherein the pulling means (16, 18, 24, 26, 28) essentially extends between the floor covering (2) and the floor.

9. Method of any of the preceding claims, wherein the adhesive layer (8, 10) is designed as a double-sided adhesive tape.

10. Method of claim 8, further comprising the step of removing a protective layer (20, 22) arranged to the floor with the use of pulling means.

11. Method of any one of the preceding claims, further comprising pressing the floor covering (2) and the connecting means (8, 10) against the floor.

12. Method of any one of the preceding claims, additionally comprising the following preparatory steps for removing a floor covering (2) in place on the floor:
- making incisions in the floor covering (2) between installations arranged on the cabin floor to form individual sections (44),
- pulling off the sections (44).

13. Method of any one of claims 1 to 11, additionally comprising the preparatory step for removing a floor covering (2) in place on the floor by pulling it off with the use of a pulling means.

## Revendications

1. Procédé de pose d'un revêtement de sol en dessous des installations sur un plancher dans une cabine d'un véhicule, présentant les étapes consistant à :
- mettre en place au moins un moyen de liaison (8, 10) sur au moins un élément choisi parmi un groupe composé d'un plancher et du revêtement de sol (2), la mise en place d'au moins un moyen de liaison (8, 10) comprenant l'application d'une couche de colle (8, 10) recouverte d'une couche protectrice (20, 22),
- compacter le revêtement de sol (2) en au moins une unité compacte, au moins une extrémité (12) du revêtement de sol (2) étant libérée,
- apporter le revêtement de sol compacté (2) dans la cabine du véhicule et le poser sur le plancher,
- tirer l'extrémité libérée (14) du revêtement de sol (2) le long d'une étendue de la cabine en dessous des agencements sur le plancher de la cabine à l'aide de moyens de traction (16, 18, 24, 26, 28) et
- relier le revêtement de sol au plancher de la cabine par le biais du moyen de liaison (8, 10).

2. Procédé selon la revendication 1, dans lequel la largeur du revêtement de sol (2) est adaptée à la largeur des installations.

3. Procédé selon la revendication 1 ou 2, dans lequel les moyens de liaison (8, 10) sont fixés au revêtement de sol (2) et les moyens de traction (16, 18, 24, 26, 28) sont fixés au moyen de liaison (8, 10).

4. Procédé selon la revendication 1 ou 2, dans lequel les moyens de traction (16, 18, 24, 26, 28) sont fixés au revêtement de sol (2).

5. Procédé selon une des revendications précédentes, dans lequel la liaison du revêtement de sol (2) par le biais du moyen de liaison (8, 10) comprend l'enlèvement de la couche protectrice (20, 22).

6. Procédé selon la revendication 5, dans lequel la couche protectrice (20, 22) est enlevée dans le sens inverse par rapport au sens de traction précédent du revêtement de sol (2).

7. Procédé selon la revendication 5 ou 6, dans lequel l'enlèvement de la couche protectrice (20, 22) est réalisé à l'aide d'au moins un moyen de traction (16, 18, 24, 26, 28) disposé au niveau de la couche protectrice (20, 22).

8. Procédé selon la revendication 6, dans lequel le moyen de traction (16, 18, 24, 26, 28) s'étend sensiblement entre le revêtement de sol (2) et le plancher.

9. Procédé selon une des revendications précédentes, dans lequel la couche de colle (8, 10) est configurée sous la forme d'un ruban adhésif double face.

10. Procédé selon la revendication 8, comprenant en outre l'étape consistant à enlever par le biais des moyens de traction une couche protectrice (20, 22) disposée par rapport au plancher.

11. Procédé selon une des revendications précédentes, consistant en outre à appuyer le revêtement de sol (2) et le moyen de liaison (8, 10) contre le plancher.

12. Procédé selon une des revendications précédentes, comprenant en outre les étapes de préparation suivantes pour enlever un revêtement de sol (2) se trouvant sur le plancher, consistant à :
- découper le revêtement de sol (2) entre les installations disposées sur le plancher pour former des segments individuels (44),
- enlever les segments (44).

13. Procédé selon une des revendications 1 à 11, comprenant en outre l'étape de préparation pour enlever un revêtement de sol (2) se trouvant sur le plancher par le biais d'un enlèvement à l'aide d'un moyen de traction.
